# EUROPÄISCHE PATENTSCHRIFT

(11) **EP 0 826 540 B1**
(45) Veröffentlichungstag und Bekanntmachung des Hinweises auf die Patenterteilung: **16.10.2002**
(21) Anmeldenummer: 97110009.4
(22) Anmeldetag: 19.06.1997
(51) Int. Cl.: B60J 10/04, B60J 10/00, E05F 15/00

(54) **Dichtung sowie Sicherheitseinrichtung mit einer Dichtung**
Seal and safety device with a seal
Joint d'étanchéité et dispositif de sécurité avec joint d'étanchéité

(30) Priorität: 30.08.1996 DE 19635181
(43) Veröffentlichungstag der Anmeldung: 04.03.1998
(73) Patentinhaber: ROBERT BOSCH GMBH, 70442 Stuttgart (DE)
(72) Erfinder: Weber, Matthias, 76534 Baden-Baden (DE); Dreier, Friedrich-Wilhelm, 76547 Sinzheim (DE)

(56) Entgegenhaltungen:
- DE-A- 2 002 140
- DE-A- 3 018 213
- DE-A- 3 312 223
- DE-A- 3 418 589
- DE-U- 9 418 117
- FR-A- 1 494 923
- FR-A- 2 220 397
- US-A- 3 131 439
- US-A- 3 465 476

## Beschreibung

### Stand der Technik

Die Erfindung betrifft eine Dichtung sowie eine Sicherheitseinrichtung mit einer Dichtung nach der Gattung der unabhängigen Ansprüche 1, 2 und 12. Derartige Dichtungen werden eingesetzt, um beispielsweise Fenster oder Schiebedächer bei Kraftfahrzeugen abzudichten. Insbesondere bei Fahrzeugen mit elektromotorischen Fensterhebern oder Schiebedachantrieben besteht die Gefahr des Einklemmens, wenn diese geschlossen werden.

Es ist bereits bekannt, (DE-A-21 57 597) an den Schließkanten sogenannte Impulsgeber anzuordnen, bei denen im Falle des Einklemmens ein elektrischer Kontakt hergestellt wird und der Motor anhält. Es hat sich jedoch gezeigt, daß nach dem Schließen der Kontakte der Motor noch eine kleine Strecke weiterläuft, bevor er zum Stillstand kommt. Dies kann zur Folge haben, daß erhebliche Kräfte auf den eingeklemmten Gegenstand einwirken. Auch möchte man den unter Spannung stehenden Impulsgeber, der sich entlang der gesamten Schließkante erstrecken muß, vermeiden.

Mit der DE-A-40 11 899 ist eine Dichtung für eine Seitenscheibe eines Fahrzeuges bekannt geworden, die schlauchartig ausgebildet und mit einem flüssigen Medium gefüllt ist. Diese Dichtung soll eine sichere Abdichtung des betreffenden Bauteils im geschlossenen Zustand erreichen. Ein Vermindern der auf einen eingeklemmten Gegenstand wirkenden Kräfte kann mit dieser Dichtung nicht erzielt werden.

Die DE-A-20 02 140 zeigt eine Schutzvorrichtung für elektrische Fensterheberanlagen, bei der Kontaktfedern an einer Kontaktschiene, die am Rücken einer Dichtleiste eingefügt ist, angeordnet sind. In der FR-A-1 494 923 wird eine Vorrichtung beschrieben, bei der eine Dichtung eine elastisch deformierbare Druckleitung gegen das Profil eines Fensterrahmens drückt, um den Anpressdruck der sich schließenden Scheibe zu messen.

### Vorteile der Erfindung

Die erfindungsgemäße Dichtung mit den Merkmalen des unabhängigen Anspruchs 1 hat den Vorteil, daß durch die Mittel, die eine vorbestimmte Federrate erzeugen, gewährleistet ist, daß auch im Falle des Nachlaufens des Motors, der eingeklemmte Gegenstand mit vorbestimmbaren Kräften beaufschlagt wird. Die Federrate kann dabei so gewählt werden, daß je nach Nachlaufwegstrecke des Motors maximale Einklemmkräfte nicht überschritten werden. Die Nachlaufstrecke des Motors hängt unter anderem von der Art des Motors sowie von der Art der Einklemmschutzerkennung ab. Übliche Einklemmschutz-Verfahren werten eine Drehzahländerung oder eine Stromerhöhung aus, die sich im Falle des Einklemmens ergibt. Konstruktiv sehr einfach kann eine Federrate vorbestimmt werden, indem die hierfür vorgesehenen Mittel direkt an den die Dichtwirkung erzielenden Lippen angeordnet sind.

Die erfindungsgemäße Dichtung mit den Merkmalen des unabhängigen Anspruchs 2 stellt eine weitere, kostengünstige Variante dar, bei der die Mittel, die eine vorbestimmte Federrate erzeugen, an einer die Dichtung abstützenden Fläche angeordnet sind.

Durch die in den Unteransprüchen aufgeführten Merkmale sind vorteilhafte Weiterbildungen der Dichtung nach den unabhängigen Ansprüchen möglich.

So können die Lippen beispielsweise eine sich unter Krafteinwirkung verformbare Blase aufweisen, die mit einem Fluid, insbesondere mit Luft, gefüllt ist. Im Bereich der Blase ist der Querschnitt der Dichtlippen geschwächt, wobei die Schwächung und damit die sich ergebende Federrate durch die Größe der Blasen in Relation zur Dicke der Querschnittsfläche der Lippen vorbestimmbar ist. Eine kostengünstige Variante ergibt sich, wenn an den Lippen Aussparungen vorgesehen sind, die ebenfalls den Querschnitt schwächen. Ferner können die Lippen zu ihren dem Verschlußkörper zuweisenden Enden hin verjüngt ausgebildet sein, so daß diese sich unter Krafteinwirkung definiert verformen. Bilden die Lippen zueinander einen stumpfen Winkel, wobei sich je eine Außenkante des stumpfen Winkels an einer U-förmigen, die Dichtung aufnehmenden Halteeinrichtung abstützt, wird das Verbiegen oder Abknicken der Lippen unter Krafteinwirkung ausgenützt, um die vorbestimmte Federrate zu erzielen. Die Federrate hängt in diesem Fall von den wirkenden Hebellängen, sowie von der Verformbarkeit des Dichtungsmaterials ab.

Die Anordnung der Mittel an einer die Dichtung abstützenden Fläche kann insbesondere durch eine stegförmige Ausgestaltung erfolgen, wobei der Steg sich in Kraftrichtung erstreckt oder aber kreisförmig ausgeführt sein kann. Zur besseren Einstellung der Federrate kann der Steg Unterbrechungen aufweisen. Insbesondere wenn der Steg kreisförmig ausgeführt ist, bildet sich ein blasenförmiger Bereich, dessen Hohlraum vorzugsweise mit Luft gefüllt ist. Durch definierte Aussparungen wird erreicht, daß die Luft mit einer von der wirkenden Kraft abhängigen Geschwindigkeit den Hohlraum verläßt. Auf diese Weise entsteht ein gedämpftes System. Diese Dämpfung kann auch in der weiter oben beschriebenen Anordnung der Blasen in den Querschnittflächen der Lippen realisiert werden.

Wenn die Gestalt der Dichtung fahrzeugabhängig bereits vorgegeben ist, kann durch Einlegen einer Blattfeder zwischen der Dichtung und der die Dichtung aufnehmenden Halterung eine vorbestimmte Federrate erzielt werden.

Bevorzugte Federraten liegen zwischen 10 N/mm und 70 N/mm, vorzugsweise zwischen 15 N/mm und 20 N/mm.

Eine vorteilhafte Sicherheitseinrichtung für elektromotorisch verschließbare Öffnungen von Kraftfahrzeugen, bei der auf den Motor eine Steuervorrichtung wirkt, die den Motor im Falle eines Einklemmens eines Gegenstandes zwischen den Schließkanten der Öffnung und des Verschlußkörpers während des Schließvorganges zumindest anhält, wird erreicht, wenn eine erfindungsgemäße Dichtung eingesetzt wird. Die Federrate der Dichtung bestimmt sich dann in einfacher Weise aus dem Quotienten der maximal zulässigen Einklemmkraft und dem Weg, den der Verschlußkörper nach dem Erkennen des Einklemmens bis zum Stillstand zurücklegt. Eine größere Sicherheit ist gewährleistet, wenn die Federrate der Dichtung bestimmt ist durch den Quotienten aus der maximal zulässigen Einklemmkraft und dem Weg, den der Verschlußkörper nach erfolgtem Einklemmen bis zum Stillstand zurücklegt. Hierzu ist es erforderlich, den Weg zu ermitteln, den der Verschlußkörper zwischen dem tatsächlichen Einklemmen und dem Erkennen des Einklemmens durch die Steuervorrichtung zurücklegt.

Eine vorteilhafte Sicherheitseinrichtung ergibt sich, wenn die Federrate des Gesamtsystems kleiner als 65 N/mm, insbesondere kleiner als 20 N/mm ist.

### Zeichnung

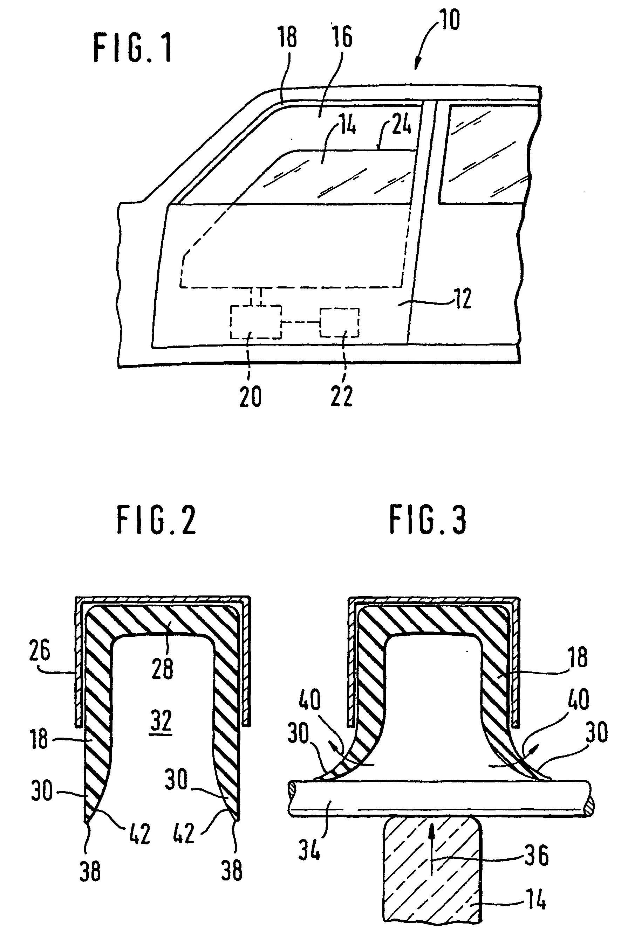

In der Zeichnung sind mehrere Ausführungsbeispiele der erfindungsgemäßen Dichtung sowie eine Sicherheitseinrichtung dargestellt und in der nachfolgenden Beschreibung näher erläutert. Es zeigen die Figur 1 eine schematisch dargestellte Sicherheitseinrichtung und die Figuren 2 bis 22 verschiedene Ausführungsbeispiele im unbelasteten und belasteten Zustand im Schnitt, teilweise auch in Seitenansicht.

### Beschreibung

In Figur 1 ist ein Ausschnitt eines Kraftfahrzeugs 10 mit einer in ein Türe 12 eingelassenen, bewegbaren Scheibe 14, mit der eine Fensteröffnung 16 geöffnet beziehungsweise geschlossen werden kann. In Geschlossenstellung greift die Scheibe 14 in eine am Rand der Öffnung 16 verlaufende Dichtung 18 ein.

Bewegt wird die Scheibe mittels eines in der Tür 12 angeordneten Elektromotors 20, auf den eine Steuervorrichtung 22 wirkt. Im Falle eines Einklemmens während des Schließvorgangs wird dies durch die Steuervorrichtung 22 erkannt und der Motor 20 angehalten. Prinzipbedingt läuft der Motor 20 vom Zeitpunkt des Einklemmens bis zum Stillstand des Motors 20 eine gewisse Zeit nach, was zu einem bestimmbaren, zurückgelegten Weg der Scheibe 14 führt. Der Gegenstand wird dann zwischen die Oberkante 24 der Scheibe 14 und der Dichtung 18 eingeklemmt.

In den Figuren 2 und 3 ist ein solcher Einklemmvorgang dargestellt. In Figur 2 ist eine Dichtung 18 gezeigt, die in einer U-förmigen Führung 26 mit nicht dargestellten Mitteln befestigt ist. Die Dichtung 18 ist ebenfalls U-förmig und weist zwei über eine Basis 28 miteinander verbundenen Lippen 30 auf. Die Scheibe 14 fährt im Normalfall in den von den Lippen 30 umschlossenen Raum 32 ein, wodurch die Fahrzeuginnenseite gegenüber eindringendem Wasser oder Schmutzpartikeln abgedichtet ist.

In Figur 3 ist ein Probekörper 34 zwischen die Oberkante 24 der in Richtung des Pfeils 36 bewegten Scheibe 14 und der Schließkante 38 der Lippen 30 der Dichtung 18 eingebracht. Die Steuervorrichtung 22 erkennt das Einklemmen und stoppt den Motor 20. Bei üblichen Systemen fährt die Scheibe 14 nach dem Einklemmen noch ca. 4 mm weiter (dieser Wert kann unterschiedlich ausfallen, ist jedoch bestimmbar). Da die Lippen 30 aus der Führung 26 in Richtung der Scheibe 14 hervorstehen, werden sie bei zunehmender Kraft in Richtung der Pfeile 40 ausgelenkt.

Um die auf den Probekörper 34 wirkenden Kräfte von den Kanten 24 und 38 auf ein vorbestimmtes Maß zu begrenzen, sind die Lippen 30 zu ihren Schließkanten 38 hin mittels einer Schräge 42 verjüngend ausgebildet. Über die Größe und den Verlauf der Schrägen 42 kann bei bekannten Festigkeitswerten des Dichtungsmaterials die Federkonstante vorbestimmt werden. Die Federkonstante kann insbesondere so gewählt werden, daß die maximale Einklemmkraft 65 N/mm nicht überschreitet. Bei einem Weg von 4 mm würde eine Federkonstante von 16,25 N/mm notwendig sein. Legt die Scheibe einen geringeren Weg zurück, kann die Federkonstante größer gewählt werden. Ist die notwendige Federkonstante festgelegt, kann der Verlauf der Schräge 42 ermittelt werden. Für weiches Material der Dichtung 18 ist die Schräge 42 kurz und mit zunehmender Festigkeit länger auszubilden. Bei einer hohen Festigkeit des Dichtungsmaterials der Dichtung 18 ergeben sich sehr schlanke Lippen 30.

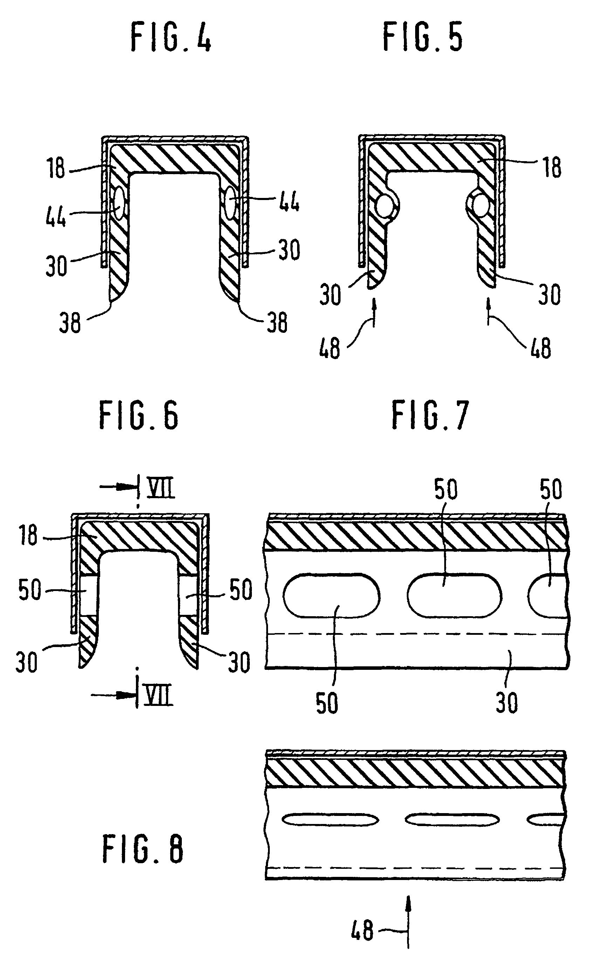

In den Figuren 4 und 5 ist eine Dichtung 18 gezeigt mit Lippen 30, deren zu den Schließkanten 38 weisende Enden eine Schräge aufweisen, die jedoch lediglich der exakten Einführung der Scheibe 14 dienen. Zur Einstellung der Federkonstanten weisen die Lippen 30 je eine oder mehrere Blasen 44 auf, die eine definierte Schwächung des Querschnitts der Lippen 30 erzeugen. Im in Figur 5 schematisch durch zwei Pfeile 48 dargestellten Einklemmfall werden die Lippen 30 unter Verformung der Querschnitte der Blasen 44 verschoben. Auch hier ergibt sich durch die von der Scheibe zurückgelegte Wegstrecke und die maximal zulässige Einklemmkraft eine notwendige Federkonstante, die durch die Schwächung des Lippenquerschnitts aufgrund der Blasen 44 einstellbar ist. Es ist hier auch denkbar, statt einer bestimmten Anzahl von Blasen 44 eine homogen über die Dichtung verteilte Blasenstruktur einzusetzen.

In den Blasen 44 ist ein Fluid, das je nach zu erzeugender Federrate kompressibel oder inkompressibel sein kann. Als kompressibles Medium eignet sich Luft und als inkompressibles Wasser oder ein Öl. Es ist denkbar, das Fluid über eine Öffnung in einen Vorratsbehälter zu befördern, wenn die Belastung 48 im Einklemmfall auftritt. Auf diese Weise kann im optimalen Fall eine Dämpfung mit konstanter Kraft erreicht werden.

Ein weiteres Ausführungsbeispiel ist in den Figuren 6 bis 8 dargestellt. Die Figur 7 zeigt einen Schnitt nach Linie VII-VII in Figur 6. Die Lippen 30 der Dichtung 18 weisen hier Durchbrüche 50 auf, die eine Schwächung der Querschnittsflächen der Lippen 30 bis auf einen Restquerschnitt erzeugen. Beim in Figur 8 dargestellten Einklemmfall tritt eine Belastung in Richtung des Pfeils 48 auf, die dazu führt, daß sich die Durchbrüche 50 in Belastungsrichtung verengen. Durch die Wahl und die Anordnung der Durchbrüche 50, die nicht unbedingt nur auf gleicher Höhe angeordnet sein müssen, ist die Federrate vorbestimmbar.

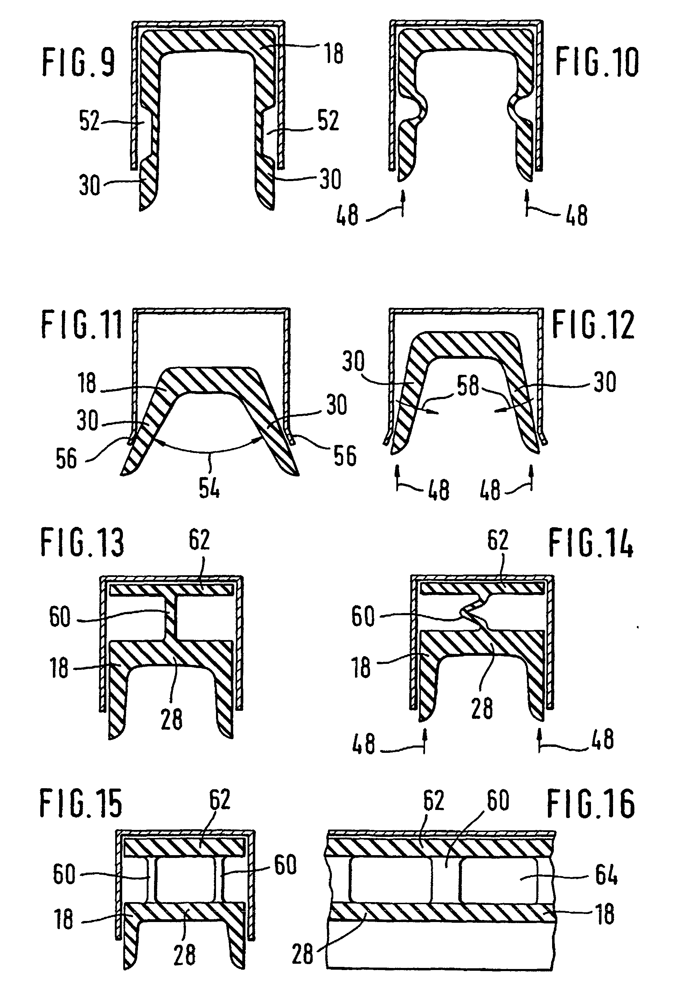

In einem weiteren Ausführungsbeispiel in den Figuren 9 und 10 weisen die Dichtlippen 30 Aussparungen 52 auf, die eine Schwächung des Querschnitts der Lippen 30 bewirken. Die Federrate für den in Figur 10 dargestellten Belastungsfall kann über die Größe und Tiefe der Aussparungen 52 variiert werden.

Die Dichtung 18 gemäß den Figuren 11 und 12 weist zwei in einem Winkel 54 zueinander angeordnete Lippen 30 auf. Der Winkel 54 ist so gewählt, daß sich die Lippen 30 aus der U-förmigen Führung 26 heraus erstrecken. An den Berührungskanten zwischen der Führung 26 und den Lippen 30 weist die Führung 26 Auskragungen 56 auf, die sich parallel zu den Lippen 30 erstrecken. Im Belastungsfall in Richtung der Pfeile 48 wird die Dichtung 18 in die Führung 26 gedrängt, wodurch die Lippen 30 in Richtung der Pfeile 58 ausgelenkt werden. Die Federkonstante hängt unter anderem von den Querschnitten der Lippen 30 ab, die sich der Auslenkung entgegensetzen. Ferner kann auch die an der Auskragung 56 entlangstreifende Oberfläche beeinflußt werden, wordurch sich eine mehr oder weniger starke Dämpfung des Systems aufgrund einer konstanten Reibkraft einstellt.

In den Figuren 13 bis 16 sind zwei Ausführungsbeispiele dargestellt, bei denen die Dichtung 18 im Bereich ihrer Basis 28 einen beziehungsweise mehrere Stege 60 aufweisen, die die Basis 28 mit einer Pufferfläche 62 verbinden. Die Pufferfläche 62 liegt an der Innenseite der Führung 26 an. Die Stege 60 können, insbesondere wenn mehrere Stege parallel zueinander angeordnet sind, Aussparungen 64 aufweisen. Im Belastungsfall in Richtung der Pfeile 48 knicken die Stege 60 definiert ein. Über die Anzahl, Länge und Stärke der Stege 60 sowie der Größe und Anzahl der Aussparungen 64 ist eine bestimmte Federrate einstellbar.

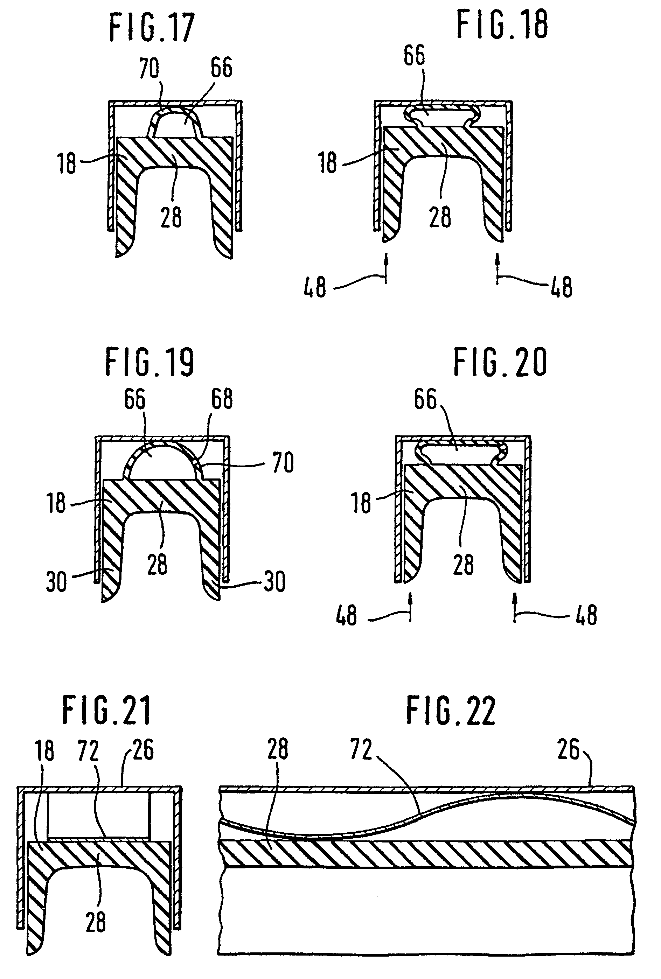

In den Figuren 17 bis 20 sind zwei unterschiedliche Dichtungen 18 dargestellt, die im Bereich zwischen ihrer Basis 28 und der Basis der Führung 26 mindestens eine Blase 66 aufweisen, wobei das Ausführungsbeispiel gemäß Figuren 19 und 20 mindestens eine Öffnung 68 in der Blasenwand 70 besitzt. Im Belastungsfall in Richtung der Pfeile 48 wird die Blase mehr oder weniger komprimiert. Durch Volumen sowie Wandstärke 70 und Befüllungsmittel der Blasen 66 kann eine bestimmte Federrate eingestellt werden. Durch die Öffnung 68 in der Blasenwand 70 strömt im Belastungsfall das Fluid aus und im Entlastungsfall wieder ein. Durch geeignete Wahl der Öffnungsgröße kann eine Dämpfung des Systems erreicht werden.

In einem letzten Ausführungsbeispiel, entsprechend den iguren 21 und 22 ist zwischen die Basis 28 der Dichtung 18 und die Basis der Führung 26 eine wellenförmige Blattfeder 72 eingelegt. Im Belastungsfall erzeugt diese Blattfeder 72 die vorbestimmte Federrate.

Es sind noch weitere Ausführungen denkbar, beispielsweise mit sich gegenseitig abstoßenden Magneten oder andersgearteten, eingelegten Federmitteln. Außerdem können auch mehrere der vorgenannten Mittel gemeinsam eingesetzt werden, um eine geeignete Federrate zu erhalten. Die Ausführungsbeispiele, die dämpfend wirkende Mittel aufweisen, wie beispielsweise die Ausführungsbeispiele nach Figuren 4, 12 und 19 können statt einer vorbestimmten Federrate bei geeigneter Wahl der Dämpfungsmittel auch eine konstante Kraft über einen bestimmten Weg erzeugen.

Die vorgenannten Dichtungen können auch bei anderen verschließbaren Öffnungen, wie beispielsweise dem Schiebedach, eingesetzt werden.

Bei einer vorteilhaften Sicherheitseinrichtung für Fensteroder Schiebedachöffnungen sind die Einzelkomponenten, wie Steuervorrichtung 22, Elektromotor 20 und Dichtung 18 so aufeinander abgestimmt, daß die maximal zulässige Einklemmkraft sowie eine maximal vorgebbare Federrate nicht überschritten werden. Die Federrate wird dabei bestimmt durch den Quotienten aus der maximal zulässigen Einklemmkraft und dem Weg, den der Verschlußkörper - Scheibe oder Schiebedach - nach dem Erkennen des Einklemmens durch die Steuervorrichtung 22 bis zum Stillstand zurücklegt. Durch einfache Versuche kann ermittelt werden, welchen Weg die Scheibe oder ein Schiebedach nach erfolgtem Einklemmen bis zum Stillstand zurücklegt. Mit diesem Weg kann die maximal zulässige Federrate optimiert werden. Die Federrate des Gesamtsystems soll dabei kleiner als 70 N/mm, insbesondere kleiner als 20 N/mm sein.

## Patentansprüche

1. Dichtung (18) mit eine Dichtwirkung erzeugenden Lippen (30) zum Abdichten von verschließbaren Öffnungen (16), insbesondere Fenster oder Schiebedachöffnungen bei Kraftfahrzeugen, **gekennzeichnet durch** eine vorbestimmbare Federrate erzeugende Mittel (42, 44, 50, 52, 54), die Teil der Lippen (30) sind.

2. Dichtung (18) zum Abdichten von verschließbaren Öffnungen, insbesondere Fenster oder Schiebedachöffnungen bei Kraftfahrzeugen, **gekennzeichnet durch** eine vorbestimmbare Federrate erzeugende Mittel (60, 62,64,66), die einteilig mit der Dichtung (18) an einer die Dichtung (18) abstützenden Fläche (28) angeordnet sind.

3. Dichtung (18) nach einem der vorhergehenden Ansprüche, **dadurch gekennzeichnet, daß** die Mittel die Form von mindestens einer ein Fluid einschließenden Blase (44) aufweisen.

4. Dichtung (18) nach Anspruch 3, **dadurch gekennzeichnet, daß** das Fluid Luft ist.

5. Dichtung (18) nach Anspruch 1, **dadurch gekennzeichnet, daß** die Mittel (42, 44, 50, 52, 54) die Form von den Querschnitt der Lippen (30) schwächenden Aussparungen (52) aufweisen.

6. Dichtung (18) nach Anspruch 1, **dadurch gekennzeichnet, daß** sich die Lippen (30) zu ihrem, dem die Öffnung (16) verschließenden Verschlußkörper (14) zuweisenden Ende (38) hin verjüngen.

7. Dichtung (18) nach Anspruch 1, **dadurch gekennzeichnet, daß** die Lippen (30) zueinander einen stumpfen Winkel (54) bilden und sich mit je einer Außenkante des stumpfen Winkels an einer U-förmigen, die Dichtung (18) aufnehmenden Halteeinrichtung (56) abstützen.

8. Dichtung (18) nach Anspruch 2, **dadurch gekennzeichnet, daß** die Mittel (60) stegförmig ausgebildet sind.

9. Dichtung (18) nach Anspruch 8, **dadurch gekennzeichnet, daß** der Steg (60) Unterbrechungen (64) aufweist.

10. Dichtung (18) nach Anspruch 2, **dadurch gekennzeichnet, daß** die Mittel die Form einer Feder (72), insbesondere einer Blattfeder aufweisen.

11. Dichtung (18) nach einem der vorhergehenden Ansprüche, **dadurch gekennzeichnet, daß** die Federrate zwischen 10N/mm und 70N/mm, vorzugsweise zwischen 15N/mm und 20N/mm beträgt.

12. Sicherheitseinrichtung für elektromotorisch verschließbare Öffnungen (16) von Kraftfahrzeugen, vorzugsweise Fenster oder Schiebedach, bei der die Öffnung (16) mindestens eine Dichtung (18) aufweist und bei der auf den Motor eine Steuervorrichtung wirkt, die den Motor im Falle eines Einklemmens eines Gegenstandes zwischen den Schließkanten der Öffnung (16) und dem die Öffnung (16) verschließenden Verschlußkörper (14) während des Schließvorganges zumindest anhält, **gekennzeichnet durch** eine Dichtung (18) nach einem der vorhergehenden Ansprüche.

13. Sicherheitseinrichtung nach Anspruch 12, **dadurch gekennzeichnet, daß** die Federrate der Dichtung (18) bestimmt ist durch den Quotienten aus der maximal zulässigen Einklemmkraft und dem Weg, den der Verschlußkörper (14) nach dem Erkennen des Einklemmens durch die Steuervorrichtung (12) bis zum Stillstand zurücklegt.

14. Sicherheitseinrichtung nach Anspruch 12, **dadurch gekennzeichnet, daß** die Federrate der Dichtung (18) bestimmt ist durch den Quotienten aus der maximal zulässigen Einklemmkraft und dem Weg, den der Verschlußkörper (14) nach erfolgtem Einklemmen bis zum Stillstand zurücklegt.

15. Sicherheitseinrichtung nach einem der Ansprüche 13 oder 14, **dadurch gekennzeichnet, daß** die Federrate des Gesamtsystems kleiner 70N/mm, insbesondere kleiner 20N/mm ist.

## Claims

1. Seal (18) having lips (30) which produce a sealing action and are intended for sealing closable openings (16), in particular windows or sliding roof openings in motor vehicles, **characterized by** means (42, 44, 50, 52, 54) which produce a predeterminable spring rate and are part of the lips (30).

2. Seal (18) for sealing closable openings, in particular windows or sliding roof openings in motor vehicles, **characterized by** means (60, 62, 64, 66) which produce a predeterminable spring rate and are arranged as one piece with the seal (18) on a surface (28) supporting the seal (18).

3. Seal (18) according to one of the preceding claims, **characterized in that** the means are in the form of at least one bubble (44) enclosing a fluid.

4. Seal (18) according to Claim 3, **characterized in that** the fluid is air.

5. Seal (18) according to Claim 1, **characterized in that** the means (42, 44, 50, 52, 54) are in the form of cutouts (52) weakening the cross section of the lips (30).

6. Seal (18) according to Claim 1, **characterized in that** the lips (30) taper towards their end (38) pointing to the closing body (4) closing the opening (16).

7. Seal (18) according to Claim 1, **characterized in that** the lips (30) form an obtuse angle (54) to each other and are supported in each case by an outer edge of the obtuse angle against a U-shaped retaining device (56) which accommodates the seal (18).

8. Seal (18) according to Claim 2, **characterized in that** the means (60) are of web-shaped design.

9. Seal (18) according to Claim 8, **characterized in that** the web (60) has interruptions (64).

10. Seal (18) according to Claim 2, **characterized in that** the means are in the form of a spring (72), in particular a leaf spring.

11. Seal (18) according to one of the preceding claims, **characterized in that** the spring rate is between 10 N/mm and 70 N/mm, preferably between 15 N/mm and 20 N/mm.

12. Safety device for openings (16) of motor vehicles, preferably window or sliding roof, which can be closed by electric motor, in which the opening (16) has at least one seal (18) and in which a control device acts on the motor, the said device at least stopping the motor during the closing process in the event of an object becoming jammed between the closing edges of the opening (16) and the closing body (14) closing the opening (16), **characterized by** a seal (18) according to one of the preceding claims.

13. Safety device according to Claim 12, **characterized in that** the spring rate of the seal (18) is determined by the quotient of the maximum permissible jamming force and the distance which the closing body (14) covers until it comes to a standstill, after jamming has been detected by the control device (12).

14. Safety device according to Claim 12, **characterized in that** the spring rate of the seal (18) is determined by the quotient of the maximum permissible jamming force and the distance which the closing body (14) covers until it comes to a standstill, after jamming has taken place.

15. Safety device according to either of Claims 13 and 14, **characterized in that** the spring rate of the entire system is smaller than 70 N/mm, in particular smaller than 20 N/mm.

## Revendications

1. Joint (18) avec des lèvres (30) générant un effet d'étanchéité pour assurer l'étanchéité d'ouverture (16) que l'on peut fermer, notamment une ouverture de fenêtre ou de toit ouvrant de véhicule automobile,
**caractérisé par**
des moyens (42, 44, 50, 52, 54) faisant partie des lèvres (30) et qui créent un coefficient de ressort prédéterminé.

2. Joint (18) pour assurer l'étanchéité d'ouverture susceptible d'être fermée, notamment des fenêtres ou toits ouvrants de véhicules automobiles,
**caractérisé par**
des moyens (60, 62, 64, 66) créant un coefficient de ressort prédéterminé, ces moyens faisant corps avec le joint (18) au niveau d'une surface (28) qui soutient le joint (18).

3. Joint d'étanchéité (18) selon l'une quelconque des revendications précédentes,
**caractérisé en ce que**
les moyens ont la forme d'au moins une poche (44) contenant un fluide.

4. Joint d'étanchéité (18) selon la revendication 3,
**caractérisé en ce que**
le fluide est de l'air.

5. Joint d'étanchéité (18) selon la revendication 1,
**caractérisé en ce que**
les moyens (42, 44, 50, 52, 54) ont la forme de cavités (52) qui affaiblissent la section des lèvres (30).

6. Joint d'étanchéité (18) selon la revendication 1,
**caractérisé en ce que**
les lèvres (30) vont en diminuant vers leur extrémité (38) tournée vers l'organe de fermeture (14).

7. Joint d'étanchéité (18) selon la revendication 1,
**caractérisé en ce que**
les lèvres (30) font entre elles un angle obtus (54) et s'appuient avec chaque fois une arête extérieure de l'angle obtus contre une installation de fixation (56) à section en forme de U qui reçoit le joint (18).

8. Joint d'étanchéité (18) selon la revendication 2,
**caractérisé en ce que**
les moyens (60) sont en forme d'entretoises.

9. Joint d'étanchéité (18) selon la revendication 8,
**caractérisé en ce que**
l'entretoise (60) comporte des interruptions (64).

10. Joint d'étanchéité (18) selon la revendication 2,
**caractérisé en ce que**
les moyens ont la forme d'un ressort (72), notamment d'un ressort lame.

11. Joint d'étanchéité (18) selon l'une quelconque des revendications précédentes,
**caractérisé en ce que**
le coefficient de ressort est compris entre 10 N/mm et 70 N/mm, de préférence entre 15 N/mm et 20 N/mm.

12. Installation de sécurité pour des ouvertures (16) de véhicules automobiles susceptibles d'être fermées avec un moteur électrique, de préférence des fenêtres ou des toits coulissants dont l'ouverture (16) comporte au moins un joint (18) et le moteur est commandé par un dispositif de commande qui au moins retient le moteur en cas de pincement d'un objet entre les arêtes de fermeture de l'ouverture (16) et l'organe de fermeture (14) qui ferme l'ouverture (16) pendant le mouvement de fermeture,
**caractérisée par**
un joint (18) selon l'une des revendications précédentes.

13. Installation de sécurité selon la revendication 12,
**caractérisée en ce que**
le coefficient de ressort du joint (18) est défini par les quotients de la force de serrage maximum autorisée et la course que l'organe de fermeture (14) parcourt après la détection du pincement par le dispositif de commande (12) jusqu'à l'arrêt.

14. Installation de sécurité selon la revendication 12,
**caractérisée en ce que**
le coefficient de ressort du joint d'étanchéité (18) est défini par le quotient de la force de serrage maximale autorisée et de la course que parcourt l'organe de fermeture (14) après que le pincement se soit produit jusqu'à l'arrêt.

15. Installation de sécurité selon l'une quelconque des revendications 13 ou 14,
**caractérisée en ce que**
le coefficient de ressort de l'ensemble du système est inférieur à 70 N/mm et notamment inférieur à 20 N/mm.
